# EUROPEAN PATENT APPLICATION

(11) **EP 4 220 764 A1**
(43) Date of publication of application: **02.08.2023**
(21) Application number: 21902728.1
(22) Date of filing: 10.12.2021
(51) Int. Cl.: H01M 4/36, H01M 4/38, H01M 4/48, H01M 4/62, H01M 10/0525

(54) **SILICON-BASED PARTICLE HAVING CORE-SHELL STRUCTURE AND PREPARATION METHOD THEREFOR, NEGATIVE ELECTRODE MATERIAL, ELECTRODE PLATE, AND BATTERY**

(30) Priority: 10.12.2020 CN 202011439050; 10.12.2020 CN 202011438904
(71) Applicant: Berzelius (Nanjing) Co., Ltd., Jiangsu 210006 (CN); Berzelius (Hefei) Co., Ltd., Anhui 231582 (CN)
(72) Inventor: LI, Zhe, Nanjing, Jiangsu 210006 (CN); ZHANG, Hebao, Nanjing, Jiangsu 210006 (CN); LUO, Shu, Nanjing, Jiangsu 210006 (CN); ZHA, Daosong, Nanjing, Jiangsu 210006 (CN); WANG, Cen, Nanjing, Jiangsu 210006 (CN)
(74) Representative: Kurig, Thomas
(86) International application number: PCT/CN2021/137149
(87) International publication number: WO 2022/122023

(57) **Abstract**

The application provides a silicon-based particle with a core-shell structure, a method for preparing the same, an anode material, an electrode and a battery. The silicon-based particle comprises: a core comprising an oxygen-containing silicon-based compound matrix and nano-silicon grains, a molar ratio of oxygen to silicon in the core being 0.5-1.5; a silicon carbide layer covering the core; and a carbon layer covering the silicon carbide layer. The silicon-based particle is used in batteries, and has the characteristics of low expansion rate, long cycle life, high capacity and high coulombic efficiency.

## Description

### Technical Field

The application relates to the field of batteries, in particular to a silicon-based particle with a core-shell structure, a method for preparing the same, an anode material, an electrode and a battery.

### Background

With the rapid development and wide application of various portable electronic devices, electric vehicles and energy storage systems in recent years, the demand for lithium-ion batteries with high energy density and long cycle life increases greatly. At present, the anode material of commercial lithium-ion batteries is mainly graphite, whose low theoretical capacity limits the further improvement of the energy density of lithium-ion batteries. Therefore, the silicon anode material has become a hotspot in research and development in recent years due to its incomparable high capacity, and has gradually moved from the research and development in laboratories to commercial application. However, the monatomic silicon anode material has a serious volume effect in the lithiation and delithiation process, and the rate of volume change is about 300%, which will cause pulverization within the electrode and separation of the electrode from the current collector. In addition, as the silicon anode material may fracture ceaselessly due to continuous expansion and contraction in the battery charging and discharging process, new interface generated in this process will be exposed to the electrolyte to form a new SEI film, so that the electrolyte will be continuously consumed, thus reducing the cycle performance of the battery. In view of the above problems of the monatomic silicon anode, researchers used SiOx as an anode material for batteries. The theoretical capacity of SiOx is about 1700 mAh/g. Although its capacity is lower than that of the monatomic silicon anode material, it has an outstanding advantage in lower expansion rate and improved cycle stability, which makes it easier in extensive industrial application than that of the monatomic silicon. However, compared with the traditional graphite anode material, SiOx still have some technical problems, such as large expansion rate, unstable SEI film and unsatisfying cycle stability.

The content in the background art is only the technology known to the discloser, and does not represent the prior art in this field.

### Summary

The application provides a silicon-based particle with a core-shell structure. The silicon-based particle is used in batteries, and has the characteristics of low expansion rate, long cycle life, high capacity and high coulombic efficiency.

According to one aspect of the application, the silicon-based particle with a core-shell structure comprises: a core comprising an oxygen-containing silicon-based compound matrix and nano-silicon grains, the molar ratio of oxygen to silicon in the core being 0.5-1.5, preferably 0.8-1.2, more preferably 0.9-1.1; a silicon carbide layer covering the core; and a carbon layer covering the silicon carbide layer.

According to some embodiments of the application, the oxygen-containing silicon-based compound matrix is SiOx (0 < x < 1.5).

According to some embodiments of the application, the oxygen-containing silicon-based compound matrix is a lithium silicate compound matrix, and the molar ratio of lithium to silicon in the core is 0.1-2.

According to some embodiments of the application, the median size of the core is 0.05-20 µm, preferably 0.3-15 µm, more preferably 3-10 µm.

According to some embodiments of the application, the particle size span (SPAN=(D90-D10)/D50) of the core is ≤2.0, preferably ≤1.5, more preferably ≤1.3, still more preferably ≤1.0.

According to some embodiments of the application, the nano-silicon grains are uniformly dispersed in the oxygen-containing silicon-based compound matrix.

According to some embodiments of the application, the median size of the nano-silicon grains is 0.1-25 nm, preferably 0.1-20 nm, more preferably 0.3-15 nm, still more preferably 0.3-10 nm.

According to some embodiments of the application, the thickness of the silicon carbide layer is 1-200 nm, preferably 8-100 nm, more preferably 10-80 nm.

According to some embodiments of the application, the thickness of the carbon layer is 1-2000 nm, preferably 3-500 nm, more preferably 5-200 nm.

According to some embodiments of the application, the mass proportion of the carbon layer in the silicon-based particle is 0.1-15 wt.%, preferably 0.5-10 wt.%, more preferably 1-7 wt.%, still more preferably 1-5 wt.%.

According to some embodiments of the application, the specific surface area of the silicon-based particle is 0.1-20 m²/g, preferably 0.8-10 m²/g, more preferably 1-7 m²/g, still more preferably 1-5 m²/g.

According to some embodiments of the application, the tap density of the silicon-based particle is ≥0.4 g/cm³, preferably >_0.7 g/cm³, more preferably >_0.9 g/cm³.

According to another aspect of the application, a method for preparing a silicon-based particle with a core-shell structure is provided, comprising: performing surface treatment on SiOx particles; performing carbon coating on the surface-treated SiOx particles to form a silicon carbide layer and a conductive carbon layer; and performing sieving and removing magnetic impurities on the carbon-coated material.

According to some embodiments of the application, the preparation method further comprises: performing lithium doping treatment on the carbon-coated material.

According to some embodiments of the application, the lithium doping treatment is performed by at least one of an electrochemical method, a liquid-phase doping method, a thermal doping method, a high-temperature mixing method and a high-energy mechanical method.

According to some embodiments of the application, the surface treatment comprises gas-phase treatment or liquid-phase treatment.

Specifically, the purpose of surface treatment is to form an oxygen-enriched active SiOx shell layer on the surface of the SiOx particles, and the shell layer can react with a carbon source precursor in the subsequent carbonization process to generate the desired silicon carbide layer.

According to some embodiments of the application, the gas-phase treatment comprises: heating the SiOx particles in an oxygen-containing atmosphere, wherein the oxygen content is 100 ppm-100 vol%, the water vapor content is 1 ppm-20 vol%, the heating time is 10-600 mins, the heat treatment temperature is 300-1100°C, and the oxygen-containing atmosphere includes one or more of oxygen, water vapor and air. The gas-phase treatment can be performed by any one of a tube furnace, a box furnace, a pushed slab kiln, a roller kiln and a rotary furnace.

According to some embodiments of the application, performing surface treatment on the SiOx particles comprises liquid-phase treatment. The liquid-phase treatment comprises: soaking the SiOx particles in water, a hydrogen peroxide solution or a nitric acid solution, wherein the mass concentration of the hydrogen peroxide solution and the nitric acid solution is ≤30 wt.%, respectively, the liquid-phase treatment temperature is 0-100°C, preferably 10-85°C, more preferably 20-60°C, and the liquid-phase treatment time is 10-600 mins, preferably 20-360 mins, more preferably 20-300 min, still more preferably 40-240 mins, even more preferably 40-120 mins.

According to some embodiments of the application, soaking the SiOx particles in water, a hydrogen peroxide solution or a nitric acid solution further comprises: stirring to make the SiOx particles to contact uniformly with the water, the hydrogen peroxide solution or the nitric acid solution.

According to some embodiments of the application, the carbon coating is performed by a chemical vapor deposition method or a heat treatment carbonization method, wherein the heat treatment carbonization method comprises: mixing the surface-treated SiOx particles with a carbon precursor, and then performing a heat treatment for carbonization in a non-oxidizing atmosphere.

According to some embodiments of the application, the chemical vapor deposition method or the heat treatment carbonization method is performed at 800-1200°C for 0.5-24 h.

Specifically, the carbon layer precursor in the chemical vapor deposition method may be any one or more of methane, ethane, ethylene, acetylene, propane, propylene, butane, butene, butadiene, benzene, toluene, xylene, styrene and phenol, and the silicon carbide layer is obtained by a reaction of these substances with the surface treated layer of the SiOx particles during chemical vapor deposition.

Specifically, the carbon precursor adopted in the heat treatment carbonization method includes one or more of glucose, sucrose, chitosan, starch, citric acid, gelatin, alginic acid, carboxymethyl cellulose, coal pitch, petroleum pitch, phenolic resin, tar, naphthalene oil, anthracene oil, polyacrylic acid, polyacrylate, polystyrene, polyvinylpyrrolidone, polyoxyethylene, polyvinyl alcohol, epoxy resin, polyacrylonitrile and polymethyl methacrylate, and the silicon carbide layer is obtained by a reaction of these substances with the surface treated layer of the SiOx particles during heat treatment.

According to some embodiments of the application, the non-oxidizing atmosphere includes one or more of nitrogen, argon, hydrogen or helium.

Further, the surface-treated SiOx particles may be mixed with the carbon precursor by any one of a VC mixer, a two-dimensional mixer, a three-dimensional mixer, a V-type mixer, a horizontal mixer, a double-cone mixer and a ribbon mixer, and the SiOx particles and the carbon precursor are subjected to heat treatment after being uniformly mixed. Alternatively, any one of a VC mixer, a coating machine and a high-speed dispersing machine is adopted to uniformly mix the SiOx particles with the carbon precursor by adding an additional solvent, and then the mixture is dried to obtain a compound of the SiOx particles and the carbon precursor. Further, the added solvent includes one or a combination of water, methanol, ethanol, isopropanol, N-butanol, ethylene glycol, ether, acetone, N-methyl-2-pyrrolidinone, methyl butanone, tetrahydrofuran, benzene, toluene, xylene, N,N-dimethylformamide, N,N-dimethylacetamide and chloroform.

Further, a carbon coating device includes a tube furnace, a box furnace, a pushed slab kiln, a roller kiln or a rotary furnace.

According to some embodiments of the application, performing carbon coating on the surface-treated SiOx particles further comprises pulverizing treatment, wherein a dispersing device includes any one of a jet mill, a ball mill, a turbine pulverizer, a raymond mill, a coulter pulverizer and a toothed disc mill.

According to yet another aspect of the application, an anode material for battery is provided, comprising the silicon-based particle as described above.

Further, the anode material is prepared by mixing the core-shell structured silicon-based particles with a carbon-based powder material, and the carbon-based powder material may be one or a combination of natural graphite, artificial graphite, surface-modified natural graphite, hard carbon, soft carbon and mesocarbon microbeads.

According to another aspect of the application, an electrode is provided, comprising the anode material as described above.

According to another aspect of the application, a battery is provided, comprising the electrode as described above.

According to some embodiments, the core-shell structure of the silicon-based particle provided in the application can increase the connection strength between the core and the outer carbon layer, and reduce the peeling off of the carbon layer caused by repeated expansion of the particles during the charging and discharging of batteries. When the oxygen-containing silicon-based compound matrix is a lithium silicate compound matrix, the core-shell structure can further improve the water tolerance of the material.

In addition, due to its high mechanical strength, the silicon carbide layer can effectively inhibit the expansion of the material particle in the lithiation and delithiation process and reduce the damage of the SEI film, thus improving the cycle performance of the battery.

Further, the carbon layer provides an excellent transmission channel for electrons and lithium ions, which ensures that the silicon-based particle with a core-shell structure fully participates in the electrochemical reaction, and also benefits in reduction in the polarization and improvement in the rate capability of the battery.

### Brief Description of the Drawings

The drawings, as part of this application, are used to provide a further understanding of this application. The illustrative embodiments and descriptions of this application are used to explain this application, and do not constitute undue restrictions on this application. In the drawings:
Fig. 1 is a structural diagram of a silicon-based particle according to an exemplary embodiment of the application;
Fig. 2 is a cross-sectional scanning electron microscope (SEM) image of a silicon-based particle according to an exemplary embodiment of the application;
Fig. 3 is a flowchart of a preparation process of a silicon-based particle according to an exemplary embodiment of the application;
Fig. 4 is a cross-sectional SEM image of a silicon-based particle according to another exemplary embodiment of the application; and
Fig. 5 is a flowchart of a preparation process of a silicon-based particle according to another exemplary embodiment of the application.

### Detailed Description of Embodiments

Hereinafter, the specific implementations of the application will be described in further detail with reference to the drawings and embodiments in order to provide a better understand of the scheme of the application and the advantages of various aspects thereof. However, the specific implementations and embodiments described below are only for the purpose of illustration, and not for the limitation of the application.

In view of the above background art, the application will be explained below with reference to specific embodiments.

### Silicon-based particle

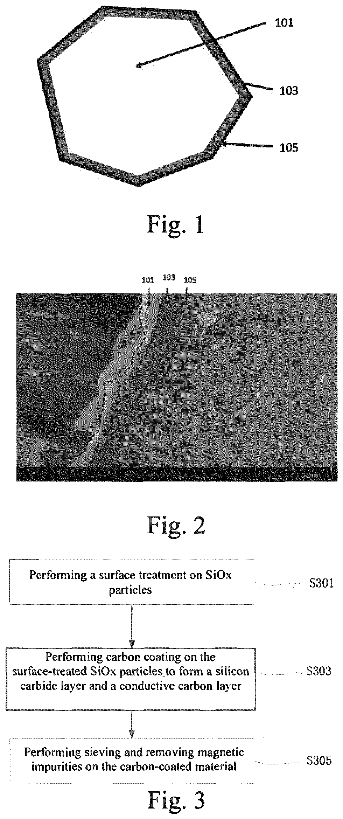

Fig. 1 is a structural diagram of a silicon-based particle according to an exemplary embodiment of the application.

Referring to Fig. 1, according to an exemplary embodiment, a silicon-based particle provided in this application comprises a core 101, a silicon carbide layer 103 and a carbon layer 105. The core 101 comprises an oxygen-containing silicon-based compound matrix and nano-silicon grains. Optionally, the oxygen-containing silicon-based compound matrix may be a SiOx matrix or a lithium silicate compound matrix.

Optionally, the molar ratio of oxygen to silicon in the core 101 is 0.5-1.5, preferably 0.8-1.2, more preferably, 0.9-1.1. When the oxygen-containing silicon-based compound matrix is a lithium silicate compound matrix, the molar ratio of lithium to silicon in the core may be 0.1-2.

According to some embodiments, the median size of the core is 0.05-20 µm, preferably 0.3-15 µm. In some embodiments of the invention, when the silicon-based particle does not contain lithium (i.e., the oxygen-containing silicon-based compound matrix is a SiOx matrix), the particle size span of the core is ≤2.0, preferably ≤1.5, more preferably ≤1.0. In some embodiments of the invention, when the silicon-based particle contains lithium (that is, the oxygen-containing silicon-based compound matrix is a lithium silicate compound matrix), the particle size span of the core is ≤2.0, preferably ≤1.5, more preferably ≤1.3. According to an exemplary embodiment, the nano-silicon grains are uniformly dispersed in the oxygen-containing silicon-based compound matrix. In some embodiments of the invention, when the silicon-based particle does not contain lithium, the median size of the nano-silicon grains may be 0.1-20 nm, preferably 0.3-10 nm. In some embodiments of the invention, when the silicon-based particle contains lithium, the median size of the nano-silicon grains may be 0.1-25 nm, preferably 0.3-15 nm.

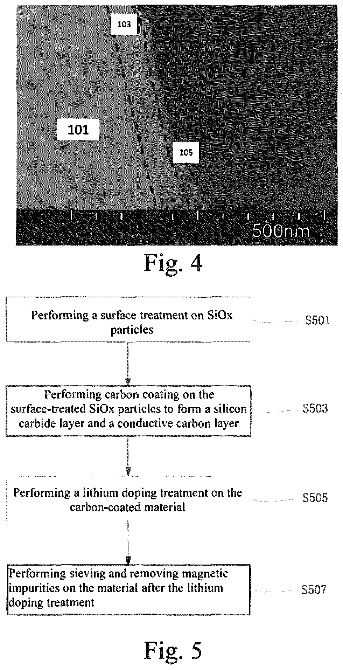

As shown in Fig. 1, according to an exemplary embodiment, the silicon carbide layer 103 covers the core 101. The core-shell structure can be clearly seen from the cross-sectional SEM images of the silicon-based particles of the embodiments shown in Figs. 2 and 4. The thickness of the silicon carbide layer 103 may be 1-200 nm, preferably 8-100 nm, more preferably 10-80 nm.

As shown in Fig. 1, according to some embodiments, the carbon layer (also referred to as a conductive carbon layer in the invention) 105 covers the silicon carbide layer 103. The thickness of the carbon layer 105 may be 1-2000 nm, preferably 3-500 nm, more preferably 5-200 nm. In some embodiments of the invention, when the silicon-based particle does not contain lithium, the mass proportion of the carbon layer in the silicon-based particle may be 0.1-15 wt.%, preferably 0.5-10 wt.%, more preferably 1-7 wt.%. In some embodiments of the invention, when the silicon-based particle contains lithium, the mass proportion of the carbon layer in the silicon-based particle may be 0.1-15 wt.%, preferably 0.5-10 wt.%, more preferably 1-5 wt.%.

In some embodiments of the invention, when the silicon-based particle does not contain lithium, the specific surface area of the silicon-based particle may be 0.1-20 m²/g, preferably 0.8-10 m²/g, more preferably 1-5 m²/g. In some embodiments of the invention, when the silicon-based particle contains lithium, the specific surface area of the silicon-based particle may be 0.1-20 m²/g, preferably 0.8-10 m²/g, more preferably 1-7 m²/g. In some embodiments of the invention, when the silicon-based particle does not contain lithium, the tap density may be ≥0.4 g/cm³, preferably ≥0.7 g/cm³, more preferably >_0.9 g/cm³. In some embodiments of the invention, when the silicon-based particle contains lithium, the tap density may be >_0.4 g/cm³, preferably ≥0.7 g/cm³.

### Preparation method of silicon-based particle

Fig. 3 is a flowchart of a preparation process of a silicon-based particle according to an exemplary embodiment of the application.

Referring to Fig. 3, in S301, SiOx particles are subjected to a surface treatment, wherein x=0.5-1.5, preferably 0.8-1.2, more preferably 0.9-1.1, and when x is close to 1, the compound is generally called silicon monoxide. The SiOx particles can be prepared by the following steps. First, a mixture of metal silicon powder and silicon dioxide powder is heated at 900-1600°C in an inert gas atmosphere or under reduced pressure, thereby generating SiOx gases which will be deposited on an adsorption plate; and when the temperature in a reaction furnace is reduced below 100°C, a sediment is taken out, and then crushed and pulverized by a ball mill, a jet mill or other devices to obtain the SiOx particle for later use.

In S301, the surface treatment comprises gas-phase treatment or liquid-phase treatment. The purpose of the surface treatment is to form an oxygen-enriched active SiOx shell layer on the surface of the SiOx particle, and the shell layer reacts with a carbon source precursor in the subsequent carbonization process to generate the desired silicon carbide layer.

According to some embodiments, the gas-phase treatment comprises: heating the core in an oxygen or water vapor atmosphere, wherein the heating time is 10-600 mins and the heat treatment temperature is 300-1 100°C. An atmosphere for heating may be water vapor, and the content of the water vapor may be 1 ppm-20 vol%.

The liquid-phase treatment comprises: soaking the SiOx particles in water, a hydrogen peroxide solution or a nitric acid solution, wherein the solution concentration is ≤30 wt.%, and the liquid-phase treatment is performed at 0-100°C for 10-600 mins. In addition, in this process, soaking the SiOx particle in water, a hydrogen peroxide solution or a nitric acid solution further comprises: stirring to allow the SiOx particles to make uniform contact with the water, the hydrogen peroxide solution or the nitric acid solution.

After the surface treatment of the SiOx particles, S303 is started.

In S303, carbon coating is performed on the surface-treated SiOx particles to form a silicon carbide layer and a conductive carbon layer. According to an exemplary embodiment, carbon coating is realized mainly by a chemical vapor deposition method, a heat treatment carbonization method, or the like.

If the chemical vapor deposition method is adopted, the temperature is controlled at 800-1200°C, and a constant temperature is maintained for 0.5-24 h. A carbon layer material may be any one or more of methane, ethane, ethylene, acetylene, propane, propylene, butane, butene, butadiene, benzene, toluene, xylene, styrene and phenol.

If the heat treatment carbonization method is adopted, specifically, the surface-treated SiOx particles is first mixed with a carbon precursor, and heat treatment carbonization is performed in a non-oxidizing atmosphere. The temperature is 800-1200°C, and a constant temperature is maintained for 0.5-24 h. According to an exemplary embodiment, the carbon precursor includes one or more of glucose, sucrose, chitosan, starch, citric acid, gelatin, alginic acid, carboxymethyl cellulose, coal pitch, petroleum pitch, phenolic resin, tar, naphthalene oil, anthracene oil, polyacrylic acid, polyacrylate, polystyrene, polyvinylpyrrolidone, polyoxyethylene, polyvinyl alcohol, epoxy resin, polyacrylonitrile and polymethyl methacrylate. The non-oxidizing atmosphere includes one or more of nitrogen, argon, hydrogen and helium.

According to some embodiments, any one of a VC mixer, a two-dimensional mixer, a three-dimensional mixer, a V-type mixer, a horizontal mixer, a double-cone mixer and a ribbon mixer may be adopted in the mixing process, and the SiOx particles and the carbon precursor are subjected to heat treatment after being uniformly mixed. Alternatively, any one of a VC mixer, a coating machine and high-speed dispersing machine is adopted to uniformly mix the SiOx particles with the carbon precursor by adding an additional solvent, and then the mixture is dried to obtain a compound of the SiOx particles and the carbon precursor. Further, the added solvent includes one or a combination of water, methanol, ethanol, isopropanol, N-butanol, ethylene glycol, ether, acetone, N-methyl-2-pyrrolidinone, methyl butanone, tetrahydrofuran, benzene, toluene, xylene, N,N-dimethylformamide, N,N-dimethylacetamide and chloroform.

According to an exemplary embodiment, a device for carbon coating in S303 includes a tube furnace, a box furnace, a pushed slab kiln, a roller kiln or a rotary furnace. In addition, after the carbon coating is completed, pulverizing treatment is performed, and a pulverizing device includes any one of a jet mill, a ball mill, a turbine pulverizer, a raymond mill, a coulter pulverizer and a toothed disc mill. Then S305 is started.

In S305, according to an exemplary embodiment, the carbon-coated material is subjected to sieving and removing magnetic impurities, so as to obtain the silicon-based particle with a core-shell structure for an anode material.

Fig. 5 is a flowchart of a preparation process of a silicon-based particle according to another exemplary embodiment of the application, comprising:
S501: performing a surface treatment on SiOx particles;
S503: performing carbon coating on the surface-treated SiOx particles to form a silicon carbide layer and a conductive carbon layer;
S505: performing a lithium doping treatment on the carbon-coated material; and
S507: performing sieving and removing magnetic impurities on the material after the lithium doping treatment.
S501, S503, and S507 are the same as the aforementioned steps S301, S303, and S305, and will not be repeated here.

In S505, according to an exemplary embodiment, lithium doping treatment is performed on the SiOx particles having the silicon carbide layer and the conductive carbon layer. The lithium doping treatment is performed by an electrochemical method, a liquid-phase doping method, a thermal doping method, a high-temperature mixing method, a high-energy mechanical method, or the like, wherein the electrochemical method, the liquid-phase doping method and the thermal doping method are preferred.

According to some embodiments, when lithiation is performed by the electrochemical method, an electrochemical cell is required, which comprises four parts: a bath, an anode electrode, a cathode electrode and a power supply, and the anode electrode and the cathode electrode are connected to two ends of the power supply respectively. Besides, the anode electrode is connected to a lithium source, and the cathode electrode is connected to a container containing the SiOx particles. The bath is filled with an organic solvent, and the lithium source and the container containing the SiOx particle are immersed in the organic solvent. After the power supply is turned on, due to an electrochemical reaction, lithium ions are doped into the SiOx structure, so as to obtain SiOx particles doped by lithium. The organic solvent may be ethylene carbonate, propylene carbonate, butylene carbonate, fluoroethylene carbonate, dimethyl carbonate, methyl ethyl carbonate, diethyl carbonate, ethyl acetate, n-propyl acetate, ethyl propionate, propyl propionate dimethyl sulfoxide, or the like. In addition, the organic solvent also contains electrolyte lithium salt, which may be lithium hexafluorophosphate (LiPF₆), lithium tetrafluoroborate (LiBF₄), lithium perchlorate (LiClO₄), or the like. The lithium source may be lithium foil or lithium compounds, such as lithium carbonate, lithium oxide, lithium hydroxide, lithium cobaltate, lithium iron phosphate, lithium manganate, lithium vanadium phosphate, lithium nickelate, or the like.

In addition, the liquid-phase doping method may also be used for the lithium doping treatment. Specifically, metal lithium, an electron transfer catalyst and the SiOx particles are added to an ether-based solvent, and the mixture is continuously stirred and heated in a non-oxidizing atmosphere for a constant-temperature reaction until the metal lithium in the solution completely disappears. Under the promotion of the electron transfer catalyst, the metallic lithium can be dissolved in the ether-based solvent to form a lithium ions coordination compound, which has a low reduction potential, so it can react with SiOx, allowing the lithium ions to enter the SiOx structure. The electron transfer catalyst includes biphenyl, naphthalene, or the like. The ether-based solvent includes methyl butyl ether, ethylene glycol monobutyl ether, tetrahydrofuran, ethylene glycol dimethyl ether, or the like. The constant-temperature reaction temperature is 25-200°C. Then, the above materials can be further heat-treated in a non-oxidizing atmosphere at 400-900°C, preferably 500-850°C. The non-oxidizing atmosphere is provided by at least one of nitrogen, argon, hydrogen and helium.

In addition, the thermal doping method may also be used for the lithium doping treatment. Specifically, the SiOx particles and a lithium-containing compound are uniformly mixed, and then heat-treated in a non-oxidizing atmosphere. The lithium-containing compound includes lithium hydroxide, lithium carbonate, lithium oxide, lithium peroxide, lithium hydride, lithium nitrate, lithium acetate, lithium oxalate, or the like. The mixing method is realized by any one of a high-speed disperser, a high-speed stirring mill, a ball mill, a conical mixer, a spiral mixer, a stirring mixer and a VC mixer. A device for the heat treatment is any one of a rotary furnace, a ladle furnace, a liner furnace, a roller kiln, a pushed slab kiln, a box furnace and a tube furnace. The temperature for the heat treatment is 400-900°C, preferably 550-850°C, the heat preservation time is 0.1-12 h, and the heating rate is more than 0.1°C per minute and less than 20°C per minute. The non-oxidizing atmosphere is provided by at least one of nitrogen, argon, hydrogen and helium.

### Characterization of silicon-based particle

### 1. Instruments for detecting silicon-based particle

A Hitachi SU8010 cold field emission scanning electron microscope was used for observing the surface morphology of a sample, and the thicknesses of a silicon carbide layer and a conductive carbon layer.

A Bettersize 2000LD laser particle analyzer was used for measuring the particle size and particle size distribution of a material.

A Quantachrome Nova4200e specific surface area tester was used for testing the specific surface area of a material.

A Bettersize BT-301 tapping apparatus was used for testing the tap density of a material.

An elementarvario EL cube elementary analyzer was used for measuring the carbon content of a material.

A Rigaku MiniFlex600 X-ray diffractometer was used for testing the crystal structure of a material.

A LabRamHR800 Raman scattering spectrometer was used for testing a silicon carbide composition in a material. The peak position of TO (transverse optical) vibration mode of silicon carbide was about 700-800 cm⁻¹.

### 2. Performance test

Preparation of electrode: 9 parts of the above-mentioned silicon-based particle with a core-shell structure, 43.5 parts of artificial graphite, 43.5 parts of natural graphite, 1 part of conductive additive Super P, 0.5 parts of multi-walled carbon nanotube, 1 part of sodium carboxymethylcellulose (CMC) and 1.5 parts of modified polyacrylate were homogenized in an aqueous system. The obtained aqueous slurry was coated, followed by a drying and calendaring process to obtain a negative electrode piece containing the silicon-based particle.

Half-cell evaluation: the prepared negative electrode piece containing the silicon-based particle with the core-shell structure, a separator, a lithium foil and a stainless steel gasket were sequentially stacked, adding 200 µL of electrolyte dropwise and then they are seal to get a 2016 lithium-ion coin cell. A small (micro) current range device from Wuhan LAND Electronic Co.Ltd. was used for testing the capacity and discharge efficiency. The reversible specific capacity and the initial coulombic efficiency of the negative half-cell were measured.

Full-cell evaluation: after being subjected to calendaring, cutting, welding and other steps, the prepared negative electrode piece containing the silicon-based particle with the core-shell structure was stacked with a paired positive electrode (ternary Ni-Co-Mn material, LiNi_{0.8}Co_{0.1}Mn_{0.1}O₂) and a separator, and put into an aluminum-plastic shell with a corresponding size; and after vacuum baking, a certain amount of electrolyte was added, and then the materials were sealed to obtain a complete lithium ion single laminated full-cell containing the silicon-based particle after formation. The capacity of the cell was about 50 mAh. At least 5 full-cells were prepared from each material for testing. A cell tester from Wuhan Lanhe Co., Ltd. was used for testing the performance of the full-cells, and the voltage range was 4.2-2.75 V. Test items mainly included the discharge capacity at 0.2 C, the average voltage, and the capacity retention rate after 200 cycles at 0.5 C charge-discharge rate. The electrochemical data obtained from the above tests, in combination with the areal densities of a positive electrode, a negative electrode and a separator obtained by weighing during cell manufacturing, were used for calculating the energy density of the full-cell per unit weight (i.e. a group of a positive electrode, a negative electrode and a separator). A cell being charged after one cycle of charge and discharge was disassembled in an inert atmosphere, the thickness of the negative electrode was measured, and the result was divided by the pristine thickness before cell assembly to obtain the expansion rate of the negative electrode.

Water tolerance test: 1 g of the prepared silicon-based particle with a core-shell structure was placed in a vial, 50 g of deionized water and a magnetic rotor were added, and then the materials were placed on a magnetic stirrer at room temperature for stirring. After sealing, the gas production rate was measured by a drainage gas collection method, and the start time of gas production was recorded.

In view of the above embodiments, the silicon-based particle provided in this application has a core-shell structure, and the silicon carbide layer can increase the connection strength between the core and the outermost carbon layer, effectively preventing the outer carbon shell of the particle from being damaged during the manufacturing process of the anode material, electrodes and batteries, and also effectively reduce the peeling off of the outer conductive carbon layer caused by repeated expansion and contraction of the silicon-based particles during cycling.

Compared with the oxygen-containing silicon-based compounds in the core and the outermost conductive carbon layer, the silicon carbide layer has higher mechanical strength, which can effectively inhibit the expansion of the particle in the lithiation process, thus effectively reducing the expansion rate of the electrodes and battery. Further, the inhibition of particle expansion can reduce the damage of the SEI film on the surface of the particle, thus promoting the cycle performance of the battery.

The coating of the carbon layer provides an excellent transmission channel for electrons and lithium ions, which ensures that the silicon-based particle with a core-shell structure fully participates in the electrochemical reaction, thus reducing the polarization and improving the rate capability of the battery.

When the oxygen-containing silicon-based compound matrix of the core is a lithium silicate compound matrix, the silicon carbide layer is able to prevent the dissolution and erosion of the lithium-containing core by the water in the process of water-based homogenization effectively, due to its denser compactness than the conductive carbon layer and better tolerance to water, so that the material can be applied to a water-based homogenization system which is widely used at present. It can also reduce the performance degradation caused by the side effects between the material and water during processing, and improve the rheological properties and bonding properties of negative paste, leading to the improvement in the quality of electrodes.

### Embodiment 1-1

Some silicon monoxide particle powder (D50=3.0 µm, SPAN=2.0) was placed in humid air with a relative humidity (the ratio of actual water vapor content to saturated water vapor content in the air at a certain temperature) of 100% at 25°C, and heated to 600°C for 60 min, so as to obtain a silicon monoxide particle with an oxygen-enriched shell layer.

2 kg of the silicon monoxide particle powder obtained above and 7 wt.% petroleum pitch were added into a VC mixer, and mixed for 30 min at a linear velocity of 8 m/s at the maximum diameter of a stirring part, so that the two raw materials were evenly mixed.

The mixture was put into a graphite crucible, placed in a box furnace, heated to 1000°C by introducing a nitrogen protective gas at 3°C/min, kept for 4 h, and then naturally cooled to room temperature to finish carbonization treatment. In this step, pitch was carbonized under high temperature in an oxygen-free atmosphere, and at the same time, part of the pitch reacted with the oxygen-enriched shell layer on the surface of the silicon monoxide particle to generate a silicon carbide layer. Materials obtained after heat treatment were pulverized, sieved and performed to removing magnetic impurities.

Using the above instruments, the specific surface area, tap density and carbon content of the silicon-based particle of the Embodiment 1-1 were 4.0 m²/g, 1.0 g/cm³ and 4.8 wt.% respectively. According to the results of an X-ray diffraction pattern, the grain size corresponding to a Si (111) crystal plane in the material obtained in the Embodiment 1-1 was calculated to be 4.2 nm by means of a Sherrer equation. The Raman scattering spectrum showed that silicon carbide existed in the material. SEM was used for observing the cross section of the sample. It was observed that the relatively rough core was coated with a dense silicon carbide shell with a thickness of about 55 nm, and the silicon carbide shell was coated with a carbon layer with a thickness of about 60 nm.

9 parts of the above-mentioned silicon-based particle with a core-shell structure, 43.5 parts of artificial graphite, 43.5 parts of natural graphite, 1 part of conductive additive Super P, 0.5 parts of multi-walled carbon nanotube, 1 part of sodium carboxy methyl cellulose (CMC) and 1.5 parts of modified polyacrylate were homogenized in an aqueous system. The obtained aqueous slurry was coated, followed by a drying and calendaring process to obtain a negative electrode piece containing the silicon-based particle.

Using the above half-cell evaluation test method, the reversible specific capacity of the negative half-cell prepared in Embodiment 1-1 was tested to be 453.6 mAh/g, and the initial coulombic efficiency was 88.2%.

By testing through the above full-cell evaluation test method, the expansion rate of the negative electrode piece prepared in Embodiment 1-1 was 26.3%, the energy density per unit weight was 382.5 Wh/kg, and the capacity retention rate after 200 cycles was 91.3%.

### Embodiment 1-2

Silicon monoxide particle powder (D50=3.0 µm, SPAN=2.0) was placed in a 20 wt.% hydrogen peroxide solution, heated to 30°C and kept for 2 h for surface treatment to obtain a silicon monoxide particle with an oxygen-enriched shell layer.

Follow-up treatment was performed by the same method as in Embodiment 1-1.

The specific surface area, tap density and carbon content of the silicon-based particle of Embodiment 1-2 were 4.0 m²/g, 0.9 g/cm³ and 4.7 wt.% respectively. The grain size corresponding to a Si (111) crystal plane in the obtained material was 4.2 nm. The Raman scattering spectrum showed that silicon carbide existed in the material. It was observed that the relatively rough core was coated with a dense silicon carbide shell with a thickness of about 55 nm, and the silicon carbide shell was coated with a carbon layer with a thickness of about 60 nm.

The reversible specific capacity of the prepared negative half-cell was 455.2 mAh/g, and the initial coulombic efficiency was 88.5%. The expansion rate of the prepared negative electrode piece of the full-cell was 26.4%, the energy density per unit weight was 385.5 Wh/kg, and the capacity retention rate after 200 cycles was 91%.

### Embodiment 1-3

Silicon monoxide particle powder (D50=7.5 µm, SPAN=2.0) was placed in a20 wt.% hydrogen peroxide solution, heated to 30°C and stirred and soaked for 2 h for surface treatment to obtain a silicon monoxide particle with an oxygen-enriched shell layer.

Follow-up treatment was performed by the same method as in Embodiment 1-1, except that the carbon precursor used was 5 wt.% coal pitch.

The specific surface area, tap density and carbon content of the silicon-based particle of Embodiment 1-3 were 1.6 m²/g, 1.3 g/cm³ and 3.5 wt.% respectively. The grain size corresponding to a Si (111) crystal plane in the obtained material was 4.2 nm. The Raman scattering spectrum showed that silicon carbide existed in the material. It was observed that the relatively rough core was coated with a dense silicon carbide shell with a thickness of about 45 nm, and the silicon carbide shell was coated with a carbon layer with a thickness of about 50 nm.

The reversible specific capacity of the prepared negative half-cell was 463.6 mAh/g, and the initial coulombic efficiency was 89.8%. The expansion rate of the prepared negative electrode piece of the full-cell was 27.3%, the energy density per unit weight was 398.5 Wh/kg, and the capacity retention rate after 200 cycles was 91%.

### Embodiment 1-4

Silicon monoxide particle powder (D50=7.5 µm, SPAN=1.5) was placed in a20 wt.% hydrogen peroxide solution, heated to 30°C and stirred and soaked for 2 h for surface treatment to obtain a silicon-based particle with an oxygen-enriched shell layer.

Follow-up treatment was performed by the same method as in Embodiment 1-3.

The specific surface area, tap density and carbon content of the silicon-based particle of Embodiment 1-4 were 1.4 m²/g, 1.3 g/cm³ and 3.5 wt.% respectively. The grain size corresponding to a Si (111) crystal plane in the obtained material was 4.2 nm. The Raman scattering spectrum showed that silicon carbide existed in the material. It was observed that the relatively rough core was coated with a dense silicon carbide shell with a thickness of about 55 nm, and the silicon carbide shell was coated with a carbon layer with a thickness of about 50 nm.

The reversible specific capacity of the prepared negative half-cell was 467.6 mAh/g, and the initial coulombic efficiency was 90.3%. The expansion rate of the prepared negative electrode piece of the full-cell was 26.6%, the energy density per unit weight was 400.4 Wh/kg, and the capacity retention rate after 200 cycles was 93.8%.

### Embodiment 1-5

Silicon monoxide particle powder (D50=7.5 µm, SPAN=1.0) was placed in a 20 wt.% hydrogen peroxide solution, heated to 30°C and stirred and soaked for 2 h for surface treatment to obtain a silicon monoxide particle with an oxygen-enriched shell layer.

Follow-up treatment was performed by the same method as in Embodiment 1-3.

The specific surface area, tap density and carbon content of the silicon-based particle of Embodiment 1-5 were 1.3 m²/g, 1.2 g/cm³ and 3.5 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 65 nm, and the silicon carbide shell was coated with a carbon layer with a thickness of about 50 nm.

The reversible specific capacity of the prepared negative half-cell was 472.6 mAh/g, and the initial coulombic efficiency was 91%. The expansion rate of the prepared negative electrode piece of the full-cell was 26%, the energy density per unit weight was 402.3 Wh/kg, and the capacity retention rate after 200 cycles was 95.4%.

### Embodiment 1-6

Silicon monoxide particle powder (D50=3.0 µm, SPAN=1.5) was placed in a 20 wt.% nitric acid solution, heated to 30°C and stirred and soaked for 2 h for surface treatment to obtain a silicon monoxide particle with an oxygen-enriched shell layer.

Follow-up treatment was performed by the same method as in Embodiment 1-1.

The specific surface area, tap density and carbon content of the silicon-based particle of Embodiment 1-6 were 3.5 m²/g, 0.9 g/cm³ and 4.8 wt.% respectively. The grain size corresponding to a Si (111) crystal plane in the obtained material was 3.9 nm. The Raman scattering spectrum showed that silicon carbide existed in the material. It was observed that the relatively rough core was coated with a dense silicon carbide shell with a thickness of about 70 nm, and the silicon carbide shell was coated with a carbon layer with a thickness of about 60 nm.

The reversible specific capacity of the prepared negative half-cell was 458.7 mAh/g, and the initial coulombic efficiency was 89.3%. The expansion rate of the prepared negative electrode piece of the full-cell was 25.7%, the energy density per unit weight was 391.9 Wh/kg, and the capacity retention rate after 200 cycles was 91.2%.

### Embodiment 1-7

Silicon monoxide particle powder (D50=3.0 µm, SPAN=1.0) was placed in a 20 wt.% nitric acid solution, heated to 30°C and stirred and soaked for 2 h for surface treatment to obtain a silicon monoxide particle with an oxygen-enriched shell layer.

Follow-up treatment was performed by the same method as in Embodiment 1-1.

The specific surface area, tap density and carbon content of the silicon-based particle of Embodiment 1-7 were 3.0 m²/g, 0.9 g/cm³ and 4.9 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 80 nm, and the silicon carbide shell was coated with a carbon layer with a thickness of about 60 nm.

The reversible specific capacity of the prepared negative half-cell was 460.3 mAh/g, and the initial coulombic efficiency was 90%. The expansion rate of the prepared negative electrode piece of the full-cell was 25%, the energy density per unit weight was 394.7 Wh/kg, and the capacity retention rate after 200 cycles was 92.4%.

### Embodiment 1-8

Silicon monoxide particle powder (D50=10.0 µm, SPAN=1.5) was placed in a 20 wt.% nitric acid solution, heated to 30°C and stirred and soaked for 2 h for surface treatment to obtain a silicon monoxide particle with an oxygen-enriched shell layer.

Follow-up treatment was performed by the same method as in Embodiment 1-1, except that 4 wt.% petroleum pitch was used.

The specific surface area, tap density and carbon content of the silicon-based particle of Embodiment 1-8 were 1.0 m²/g, 1.3 g/cm³ and 3.0 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 45 nm, and the silicon carbide shell was coated with a carbon layer with a thickness of about 45 nm.

The reversible specific capacity of the prepared negative half-cell was 470.2 mAh/g, and the initial efficiency was 90.8%. The expansion rate of the prepared negative electrode piece of the full-cell was 27.1%, the energy density per unit weight was 402.1 Wh/kg, and the capacity retention rate after 200 cycles was 95.4%.

### Embodiment 1-9

Silicon monoxide particle powder (D50=5.0 µm, SPAN=1.0) was placed in a 20 wt.% nitric acid solution, heated to 30°C and stirred and soaked for 2 h for surface treatment to obtain a silicon monoxide particle with an oxygen-enriched shell layer.

Follow-up treatment was performed by the same method as in Embodiment 1-1, except that 6 wt.% petroleum pitch was used.

The specific surface area, tap density and carbon content of the silicon-based particle of Embodiment 1-9 were 2.0 m²/g, 1.1 g/cm³ and 4.0 wt.% respectively. The grain size corresponding to a Si (111) crystal plane in the obtained material was 4.0 nm. The Raman scattering spectrum showed that silicon carbide existed in the material. It was observed that the relatively rough core was coated with a dense silicon carbide shell with a thickness of about 75 nm, and the silicon carbide shell was coated with a carbon layer with a thickness of about 55 nm.

The reversible specific capacity of the prepared negative half-cell was 468.3 mAh/g, and the initial coulombic efficiency was 90.6%. The expansion rate of the prepared negative electrode piece of the full-cell was 25.5%, the energy density per unit weight was 397.5 Wh/kg, and the capacity retention rate after 200 cycles was 94%.

### Embodiment 1-10

Silicon monoxide particle powder (D50=5.0 µm, SPAN=1.0) was placed in a 20 wt.% nitric acid solution, heated to 30°C and stirred and soaked for 2 h for surface treatment to obtain a silicon monoxide particle with an oxygen-enriched shell layer.

Follow-up treatment was performed by the same method as in Embodiment 1-9, except that the heat treatment temperature was 800°C and the heat preservation time was 6 h.

The specific surface area, tap density and carbon content of the silicon-based particle of Embodiment 1-10 were 2.1 m²/g, 1.1 g/cm³ and 4.0 wt.% respectively. The grain size corresponding to a Si (111) crystal plane in the obtained material was 3.0 nm. The Raman scattering spectrum showed that silicon carbide existed in the material. It was observed that the relatively rough core was coated with a dense silicon carbide shell with a thickness of about 45 nm, and the silicon carbide shell was coated with a carbon layer with a thickness of about 55 nm.

The reversible specific capacity of the prepared negative half-cell was 462.2 mAh/g, and the initial coulombic efficiency was 90.1%. The expansion rate of the prepared negative electrode piece of the full-cell was 26.7%, the energy density per unit weight was 395.5 Wh/kg, and the capacity retention rate after 200 cycles was 94.9%.

### Embodiment 1-11

Silicon monoxide particle powder (D50=5.0 µm, SPAN=1.5) was placed in a 20 wt.% hydrogen peroxide solution, heated to 30°C and stirred and soaked for 2 h for surface treatment to obtain a silicon monoxide particle with an oxygen-enriched shell layer.

Follow-up treatment was performed by the same method as in Embodiment 1-9, except that the heat treatment temperature was 1200°C and the heat preservation time was 3 h.

The specific surface area, tap density and carbon content of the silicon-based particle of Embodiment 1-11 were 2.0 m²/g, 1.1 g/cm³ and 4.2 wt.% respectively. The grain size corresponding to a Si (111) crystal plane in the obtained material was 6.0 nm. The Raman scattering spectrum showed that silicon carbide existed in the material. It was observed that the relatively rough core was coated with a dense silicon carbide shell with a thickness of about 100 nm, and the silicon carbide shell was coated with a carbon layer with a thickness of about 55 nm.

The reversible specific capacity of the prepared negative half-cell was 511.3 mAh/g, and the initial coulombic efficiency was 90.7%. The expansion rate of the prepared negative electrode piece of the full-cell was 24.7%, the energy density per unit weight was 381.6 Wh/kg, and the capacity retention rate after 200 cycles was 92.6%.

### Embodiment 1-12

Silicon monoxide particle powder (D50=5.0 µm, SPAN=1.0) was placed in dry air with a flow rate of 200 sccm, heated to 600°C and kept for 60 min for surface treatment to obtain a silicon monoxide particle with an oxygen-enriched shell layer.

Follow-up treatment was performed by the same method as in Embodiment 1-9.

The specific surface area, tap density and carbon content of the silicon-based particle of Embodiment 1-12 were 2.0 m²/g, 1.2 g/cm³ and 4.2 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 55 nm.

The reversible specific capacity of the prepared negative half-cell was 461.2 mAh/g, and the initial coulombic efficiency was 90.4%. The expansion rate of the prepared negative electrode piece of the full-cell was 27.7%, the energy density per unit weight was 394.7 Wh/kg, and the capacity retention rate after 200 cycles was 90.8%.

### Embodiment 1-13

Silicon monoxide particle powder (D50=5.0 µm, SPAN=1.0) was placed in the atmosphere with a mixture of dry air (flow rate of 100 sccm) and oxygen (flow rate of 100 sccm), heated to 500°C and kept for 60 min for surface treatment to obtain a silicon monoxide particle with an oxygen-enriched shell layer.

Follow-up treatment was performed by the same method as in Embodiment 1-9.

The specific surface area, tap density and carbon content of the silicon-based particle of Embodiment 1-13 were 2.0 m²/g, 1.1 g/cm³ and 4.1 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 55 nm.

The reversible specific capacity of the prepared negative half-cell was 460.3 mAh/g, and the initial coulombic efficiency was 90%. The expansion rate of the prepared negative electrode piece of the full-cell was 27.5%, the energy density per unit weight was 393.1 Wh/kg, and the capacity retention rate after 200 cycles was 90.4%.

### Embodiment 1-14

Silicon monoxide particle powder (D50=5.0 µm, SPAN=1.0) was placed in oxygen with a flow rate of 200 sccm, heated to 400°C and kept for 60 min for surface treatment to obtain a silicon monoxide particle with an oxygen-enriched shell layer.

Follow-up treatment was performed by the same method as in Embodiment 1-9.

The specific surface area, tap density and carbon content of the silicon-based particle of Embodiment 1-14 were 2.0 m²/g, 1.2 g/cm³ and 4.1 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 55 nm.

The reversible specific capacity of the prepared negative half-cell was 459.7 mAh/g, and the initial coulombic efficiency was 90.3%. The expansion rate of the prepared negative electrode piece of the full-cell was 27.6%, the energy density per unit weight was 395.8 Wh/kg, and the capacity retention rate after 200 cycles was 90.9%.

### Embodiment 1-15

Silicon monoxide particle powder (D50=5.0 µm, SPAN=1.0) was placed in a 20 wt.% nitric acid solution, heated to 30°C and stirred and soaked for 2 h for surface treatment to obtain a silicon monoxide particle with an oxygen-enriched shell layer.

The silicon monoxide particle powder subjected to surface treatment was put into a graphite crucible, placed in a box furnace, heated to 1000°C at 3°C/min by introducing an acetylene gas, kept for 4 h, and then naturally cooled to room temperature to finish carbonization treatment. Materials obtained after heat treatment were pulverized, sieved and performed to removing magnetic impurities.

The specific surface area, tap density and carbon content of the silicon-based particle of Embodiment 1-15 were 2.1 m²/g, 1.2 g/cm³ and 5.5 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 10 nm, and the silicon carbide shell was coated with a carbon layer with a thickness of about 75 nm.

The reversible specific capacity of the prepared negative half-cell was 463.4 mAh/g, and the initial coulombic efficiency was 90.4%. The expansion rate of the prepared negative electrode piece of the full-cell was 26.7%, the energy density per unit weight was 392.7 Wh/kg, and the capacity retention rate after 200 cycles was 91.2%.

### Comparative example 1-1

500 g of silicon monoxide particle powder (D50=5.0 µm, SPAN=1.0) was placed in a rotary furnace and heated to 1000°C, then methane was added at a flow rate of 1 L/min for 60 min. After that, the methane flow was stopped and the temperature was lowered to room temperature to obtain a product, which was performed to sieving and removing magnetic impurities to obtain a silicon oxide composite anode material.

The specific surface area, tap density and carbon content of the silicon-based particle of Comparative example 1-1 were 2.2 m²/g, 1.2 g/cm³ and 4.1 wt.% respectively. The grain size corresponding to a Si (111) crystal plane in the obtained material was 4.2 nm. It was observed that outside the relatively rough core, no silicon carbide shell existed, and a carbon layer with a thickness of 65 nm was provided.

The reversible specific capacity of the prepared negative half-cell was 459.8 mAh/g, and the initial coulombic efficiency was 89.2%. The expansion rate of the prepared negative electrode piece of the full-cell was 29.4%, the energy density per unit weight was 393.0 Wh/kg, and the capacity retention rate after 200 cycles was 85.6%.

### Comparative example 1-2

500 g of SiOₓ (0.6≤x≤1.1) particle powder (D50=5.0 µm, SPAN=1.0) was placed in a rotary furnace and heated to 300°C, then oxygen was introduced at a flow rate of 200 mL/min for 20 min. After that, the oxygen flow was stopped and then the temperature was lowered to room temperature.

An obtained product was placed in a rotary furnace and heated to 1100°C, then methane was introduced at a flow rate of 1 L/min for 60 min. Then the methane flow was stopped and the temperature was lowered to room temperature. A silicon-based particle anode material was obtained after removing magnetic impurities and sieving.

The specific surface area, tap density and carbon content of the silicon-based particle of Comparative example 1-2 were 2.2 m²/g, 1.1 g/cm³ and 4.2 wt.% respectively. The grain size corresponding to a Si (111) crystal plane in the obtained material was 4.5 nm. It was observed that outside the relatively rough core, a silicon carbide layer with a thickness of about 3 nm was provided, and a carbon layer with a thickness of 65 nm was provided.

The reversible specific capacity of the prepared negative half-cell was 462.5 mAh/g, and the initial coulombic efficiency was 88.3%. The expansion rate of the prepared negative electrode piece of the full-cell was 29.8%, the energy density per unit weight was 391.4 Wh/kg, and the capacity retention rate after 200 cycles was 88.4%.

### Comparative example 1-3

A silicon monoxide raw material was first treated by a jaw breaker, and then crushed and screened by a jet mill to obtain silicon monoxide particle powder (D50=5.0 µm, SPAN=1.0). The silicon monoxide particle powder was placed in a 20 wt.% hydrogen peroxide solution at 30°C, and stirred and soaked for 2 h for surface treatment.

2 kg of the silicon monoxide particle powder subjected to surface treatment and 120 g of petroleum pitch were added into a VC mixer, and mixed for 30 min at a linear velocity of 8 m/s at the maximum diameter of the stirring part, so that the two raw materials were evenly mixed. Follow-up treatment was performed by the same method as in Embodiment 1-1, except that the final temperature of heating was 700°C.

The specific surface area, tap density and carbon content of the silicon-based particle of Comparative example 1-3 were 2.0 m²/g, 1.1 g/cm³ and 4.1 wt.% respectively. It was observed that the relatively rough core was coated with a carbon layer with a thickness of about 60 nm. Due to the low carbonization temperature, carbon could not react with the oxygen-enriched shell layer on the surface of the silicon monoxide particle, and no silicon carbide layer was observed.

The reversible specific capacity of the prepared negative half-cell was 457.3 mAh/g, and the initial coulombic efficiency was 88.5%. The expansion rate of the prepared negative electrode piece was 30.1%, the energy density per unit weight was 390.6 Wh/kg, and the capacity retention rate after 200 cycles was 90.1%.

### Comparative example 1-4

Silicon monoxide particle powder (D50=5.0 µm, SPAN=1.0) was placed in humid air with a relative humidity of about 80%, heated to 1000°C and kept for 60 min for surface treatment.

Follow-up treatment was performed by the same method as in Embodiment 1-9.

The specific surface area, tap density and carbon content of the silicon-based particle of Comparative example 1-4 were 2.1 m²/g, 1.1 g/cm³ and 4.0 wt.% respectively. The grain size corresponding to a Si (111) crystal plane in the obtained material was 4.1 nm. The Raman scattering spectrum showed that silicon carbide existed in the material. It was observed that the relatively rough core was coated with a dense silicon carbide shell with a thickness of about 500 nm, and the silicon carbide shell was coated with a carbon layer with a thickness of about 60 nm.

The reversible specific capacity of the prepared negative half-cell was 443.2 mAh/g, and the initial coulombic efficiency was 85.2%. The expansion rate of the prepared negative electrode piece was 29.5%, the energy density per unit weight was 367.8 Wh/kg, and the capacity retention rate after 200 cycles was 88.4%.

### Embodiment 2-1

Silicon monoxide particle powder (D50=5.0 µm, SPAN=1.3) was placed in air with a relative humidity of about 100% at 25°C, heated to 600°C and kept for 60 min for surface treatment to obtain a silicon monoxide particle with an oxygen-enriched shell layer.

2 kg of the silicon monoxide particle powder subjected to surface treatment and 120g of petroleum pitch were added into a VC mixer, and mixed for 30 min at a linear velocity of 8 m/s at the maximum diameter of the stirring part, so that the two raw materials were evenly mixed.

The mixture was put into a graphite crucible, placed in a box furnace, heated to 1000°C by introducing a nitrogen protective gas at 3°C/min, kept for 4 h, and then naturally cooled to room temperature to finish heat treatment. In this step, pitch was carbonized under high temperature in an oxygen-free atmosphere to generate a conductive carbon layer, and at the same time, part of the pitch reacted with the oxygen-enriched shell layer on the surface of the silicon monoxide particle to generate a silicon carbide layer. The carbonized product was crushed by a toothed disc mill at a linear speed of about 5 m/s, and a composite material obtained after heat treatment was pulverized into fine powder.

In a drying room with a relative humidity of less than 30%, 100 g of the powder obtained in the above step, 9 g of metal lithium ribbon and 2 g of biphenyl were added into a sealable glass container, and then 200 g of methyl butyl ether and a large stirring magneton were added. At this point, the container was filled with argon and sealed, and then placed on a magnetic stirrer for stirring at a rotating speed of 200 r/min. After reacting at a constant temperature of 70°C for 5 h, methyl butyl ether in the container was evaporated or filtered, and then dried. Then, the obtained powder was placed in a tube furnace and heat-treated in an argon atmosphere. The temperature was increased to 750°C at a heating rate of 10°C/min and kept for 3 h. After natural cooling, oxygen-containing silicon-based compound powder doped by lithium was obtained. Finally, after sieving and removing magnetic impurities, a final product which can be used as an anode material was obtained.

By testing through the above instruments, the particle size D50, the span, the specific surface area, and the carbon content of the silicon-based particle of Embodiment 2-1 were 6.2 µm, 1.40, 3.1 m²/g, and 3.6 wt.% respectively. According to the results of an X-ray diffraction pattern, the grain size corresponding to a Si (111) crystal plane in the material obtained in Embodiment 2-1 was calculated to be 5.0 nm by means of a Sherrer equation. The Raman scattering spectrum showed that silicon carbide existed in the material. SEM was used for observing the cross section of the sample. It was observed that the relatively rough core was coated with a dense silicon carbide shell with a thickness of about 50 nm, and the silicon carbide shell was coated with a carbon layer with a thickness of about 30 nm.

Using the above water tolerance test method, the silicon-based particle obtained in Embodiment 2-1 started to produce gas after being soaked in water for 5 days.

Using the above electrode preparation method, a silicon-based particle negative electrode piece was obtained.

Using the above half-cell evaluation test method, the reversible specific capacity of the negative half-cell prepared in Embodiment 2-1 was tested to be 428.1 mAh/g, and the initial coulombic efficiency was 93.6%.

Using the above full-cell evaluation test method, the expansion rate of the prepared negative electrode piece in the full-cell in Embodiment 2-1 was tested to be 27.4%, the energy density per unit weight was 414.2 Wh/kg, and the capacity retention rate after 200 cycles was 92.3%.

### Embodiment 2-2

Silicon monoxide particle powder (D50=5.0 µm, SPAN=1.3) was placed in a 20 wt.% hydrogen peroxide solution at 50°C, stirred for 4 h, then cooled to room temperature, filtered and dried.

Follow-up treatment was performed by the same method as in Embodiment 2-1.

The particle size D50, the span, the specific surface area, and the carbon content of the silicon-based particle of Embodiment 2-2 were 6.3 µm, 1.40, 3.1 m²/g and 3.6 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 60 nm, and the silicon carbide shell was coated with a carbon layer with a thickness of about 30 nm.

The obtained silicon-based particle started to produce gas after being soaked in water for 6 days. The reversible specific capacity of the prepared negative half-cell was 425.9 mAh/g, and the initial coulombic efficiency was 93.6%. The expansion rate of the prepared negative electrode piece of the full-cell was 28.4%, the energy density per unit weight was 413.2 Wh/kg, and the capacity retention rate after 200 cycles was 89.2%.

### Embodiment 2-3

Silicon monoxide particle powder (D50=5.0 µm, SPAN=1.3) was placed in a 20 wt.% nitric acid solution at 60°C, stirred for 4 h, then cooled to room temperature, filtered and dried.

Follow-up treatment was performed by the same method as in Embodiment 2-1.

The particle size D50, the span, the specific surface area, and the carbon content of the silicon-based particle of Embodiment 2-3 were 6.3 µm, 1.4, 3.1 m²/g and 3.6 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 70 nm, and the silicon carbide shell was coated with a carbon layer with a thickness of about 30 nm.

The obtained silicon-based particle started to produce gas after being soaked in water for 7 days. The reversible specific capacity of the prepared negative half-cell was 425.1 mAh/g, and the initial coulombic efficiency was 93.8%. The expansion rate of the prepared negative electrode piece of the full-cell was 28.2%, the energy density per unit weight was 413.5 Wh/kg, and the capacity retention rate after 200 cycles was 89.5%.

### Embodiment 2-4

Silicon monoxide particle powder (D50=5.0 µm, SPAN=1.3) was placed in water at 80°C, stirred and soaked for 4 h, then cooled to room temperature, filtered and dried.

Follow-up treatment was performed by the same method as in Embodiment 2-1.

The particle size D50, the span, the specific surface area, and the carbon content of the silicon-based particle of Embodiment 2-4 were 6.3 µm, 1.40, 3.1 m²/g and 3.6 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 40 nm, and the silicon carbide shell was coated with a carbon layer with a thickness of about 30 nm.

The obtained silicon-based particle started to produce gas after being soaked in water for 5 days. The reversible specific capacity of the prepared negative half-cell was 425.4 mAh/g, and the initial coulombic efficiency was 93.7%. The expansion rate of the prepared negative electrode piece of the full-cell was 27.9%, the energy density per unit weight was 413.2 Wh/kg, and the capacity retention rate after 200 cycles was 92.1%.

### Embodiment 2-5

Silicon monoxide particle powder (D50=5.0 µm, SPAN=1.3) was placed in dry air with a flow rate of 200 sccm (water content about 500 ppm) for surface treatment, and the temperature was controlled at 600°C and kept for 60 min.

Follow-up treatment was performed by the same method as in Embodiment 2-1.

The particle size D50, the span, the specific surface area, and the carbon content of the silicon-based particle of Embodiment 2-5 were 6.1 µm, 1.40, 3.1 m²/g and 3.6 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 30 nm.

The obtained silicon-based particle started to produce gas after being soaked in water for 4 days. The reversible specific capacity of the prepared negative half-cell was 426.7 mAh/g, and the initial coulombic efficiency was 93.5%. The expansion rate of the prepared negative electrode piece of the full-cell was 28.7%, the energy density per unit weight was 413.2 Wh/kg, and the capacity retention rate after 200 cycles was 89.3%.

### Embodiment 2-6

Silicon monoxide particle powder (D50=5.0 µm, SPAN=1.3) was placed in a mixture of dry air (flow rate of 100 sccm) and oxygen (flow rate of 100 sccm) at 500°C for 60 min for surface treatment.

Follow-up treatment was performed by the same method as in Embodiment 2-1.

The particle size D50, the span, the specific surface area, and the carbon content of the silicon-based particle of Embodiment 2-6 were 6.1 µm, 1.40, 3.1 m²/g and 3.6 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 30 nm.

The obtained silicon-based particle started to produce gas after being soaked in water for 4 days. The reversible specific capacity of the prepared negative half-cell was 425.8 mAh/g, and the initial coulombic efficiency was 93.6%. The expansion rate of the prepared negative electrode piece of the full-cell was 28.6%, the energy density per unit weight was 413 Wh/kg, and the capacity retention rate after 200 cycles was 89.2%.

### Embodiment 2-7

Silicon monoxide particle powder (D50=5.0 µm, SPAN=1.3) was placed in oxygen with a flow rate of 200 sccm for surface treatment at 400°Cfor 60 min.

Follow-up treatment was performed by the same method as in Embodiment 2-1.

The particle size D50, the span, the specific surface area, and the carbon content of the silicon-based particle of Embodiment 2-7 were 6.1 µm, 1.40, 3.1 m²/g and 3.6 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 5 nm, and the silicon carbide shell was coated with a carbon layer with a thickness of about 30 nm.

The obtained silicon-based particle started to produce gas after being soaked in water for 4 days. The reversible specific capacity of the prepared negative half-cell was 426.2 mAh/g, and the initial coulombic efficiency was 93.5%. The expansion rate of the prepared negative electrode piece of the full-cell was 28.5%, the energy density per unit weight was 413.2 Wh/kg, and the capacity retention rate after 200 cycles was 88.9%.

### Embodiment 2-8

Silicon monoxide particle powder (D50=5.0 µm, SPAN=1.8) was placed in humid air with a relative humidity of 100% (25°C) for surface treatment at 600°C for 60 min.

Follow-up treatment was performed by the same method as in Embodiment 2-1.

The particle size D50, the span, the specific surface area, and the carbon content of the silicon-based particle of Embodiment 2-8 were 6 µm, 1.90, 3.1 m²/g and 3.8 wt.% respectively. The grain size corresponding to a Si (111) crystal plane in the obtained material was 5.0 nm. The Raman scattering spectrum showed that silicon carbide existed in the material. It was observed that the relatively rough core was coated with a dense silicon carbide shell with a thickness of about 30 nm, and the silicon carbide shell was coated with a carbon layer with a thickness of about 30 nm.

The obtained silicon-based particle started to produce gas after being soaked in water for 5 days. The reversible specific capacity of the prepared negative half-cell was 426.5 mAh/g, and the initial coulombic efficiency was 93.8%. The expansion rate of the prepared negative electrode piece of the full-cell was 27.6%, the energy density per unit weight was 414 Wh/kg, and the capacity retention rate after 200 cycles was 90%.

### Embodiment 2-9

Silicon monoxide particle powder (D50=5.0 µm, SPAN=1) was placed in humid air with a relative humidity of 100% (25°C) for surface treatment at 600°C for 60 min.

By using the same coating and heat treatment methods as in Embodiment 2-1, silicon monoxide particle powder with a silicon carbide layer and a conductive carbon layer was obtained.

Next, lithium doping treatment was performed by a solid-phase doping method. Specifically, 500 g of the particle was mixed with 40 g of lithium hydride powder, and the mixed powder was placed in a tube furnace and heat-treated in an argon atmosphere. The temperature was increased to 650°C at a heating rate of 10°C/min, and then kept for 6 h. After natural cooling, the material was taken out of the tube furnace. Finally, after sieving and removing magnetic impurities, a product which can be used as an anode material was obtained.

The particle size D50, the span, the specific surface area, and the carbon content of the silicon-based particle of Embodiment 2-9 were 6.3 µm, 1.20, 2.3 m²/g and 3.5 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 30 nm, and the silicon carbide shell was coated with a carbon layer with a thickness of about 50 nm.

The obtained silicon-based particle started to produce gas after being soaked in water for 9 days. The reversible specific capacity of the prepared negative half-cell was 429.6 mAh/g, and the initial coulombic efficiency was 93.8%. The expansion rate of the prepared negative electrode piece of the full-cell was 27.3%, the energy density per unit weight was 415.3 Wh/kg, and the capacity retention rate after 200 cycles was 92.7%.

### Embodiment 2-10

Silicon monoxide particle powder (D50=5.0 µm, SPAN=1) was placed in humid air with a relative humidity of 100% (25°C) for surface treatment at 600°C for 60 min.

By using the same coating and heat treatment methods as in Embodiment 2-1 except that the carbonization temperature was 900°C and the preservation time was 6 h, silicon monoxide particle powder with a silicon carbide layer and a conductive carbon layer was obtained.

Lithium doping treatment was performed by the same solid-phase doping method as in Embodiment 2-9.

The particle size D50, the span, the specific surface area, and the carbon content of the silicon-based particle of Embodiment 2-10 were 6.3 µm, 1.20, 2.3 m²/g and 3.5 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 20 nm, and the silicon carbide shell was coated with a carbon layer with a thickness of about 50 nm.

The obtained silicon-based particle started to produce gas after being soaked in water for 6 days. The reversible specific capacity of the prepared negative half-cell was 430.4 mAh/g, and the initial coulombic efficiency was 93.6%. The expansion rate of the prepared negative electrode piece of the full-cell was 27.9%, the energy density per unit weight was 414.8 Wh/kg, and the capacity retention rate after 200 cycles was 90.9%.

### Embodiment 2-11

Silicon monoxide particle powder (D50=5.0 µm, SPAN=1) was placed in humid air with a relative humidity of 100% (25°C) for surface treatment at 600°C for 60 min.

The same coating and heat treatment methods as in Embodiment 2-1 were adopted except that the carbonization temperature was 850°C and the preservation time was 6 h.

Lithium doping treatment was performed by the same solid-phase doping method as in Embodiment 2-9.

The particle size D50, the span, the specific surface area, and the carbon content of the silicon-based particle of Embodiment 2-11 were 6.3 µm, 1.20, 2.3m²/g and 3.5 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 15 nm, and the silicon carbide shell was coated with a carbon layer with a thickness of about 50 nm.

The obtained silicon-based particle started to produce gas after being soaked in water for 5 days. The reversible specific capacity of the prepared negative half-cell was 432.3 mAh/g, and the initial coulombic efficiency was 93.4%. The expansion rate of the prepared negative electrode piece of the full-cell was 28%, the energy density per unit weight was 415.2 Wh/kg, and the capacity retention rate after 200 cycles was 90.5%.

### Embodiment 2-12

Silicon monoxide particle powder (D50=5.0 µm, SPAN=1) was placed in humid air with a relative humidity of 100% (25°C) for surface treatment at 600°C for 60 min.

By using the same coating and heat treatment methods as in Embodiment 2-1 except that the carbonization temperature was 1100°C and the preservation time was 2 h, silicon monoxide particle powder with a silicon carbide layer and a conductive carbon layer was obtained.

Lithium doping treatment was performed by the same solid-phase doping method as in Embodiment 2-9.

The particle size D50, the span, the specific surface area, and the carbon content of the silicon-based particle of Embodiment 2-12 were 6.3 µm, 1.20, 2.3 m²/g and 3.5 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 50 nm, and the silicon carbide shell was coated with a carbon layer with a thickness of about 50 nm.

The obtained silicon-based particle started to produce gas after being soaked in water for 9 days. The reversible specific capacity of the prepared negative half-cell was 427.4 mAh/g, and the initial coulombic efficiency was 93.8%. The expansion rate of the negative electrode piece prepared in Embodiment 2-12 was 27.1%, the energy density per unit weight was 414.3 Wh/kg, and the capacity retention rate after 200 cycles was 88.5%.

### Embodiment 2-13

Silicon monoxide particle powder (D50=5.0 µm, SPAN=1) was placed in humid air with a relative humidity of 100% (25°C) for surface treatment, the temperature was approximately 600°C, and the time was approximately 60 min.

The same coating and heat treatment methods as in Embodiment 2-1 were adopted except that the carbonization temperature was 1100°C and the preservation time was 6 h.

Lithium doping treatment was performed by the same solid-phase doping method as in Embodiment 2-9.

The particle size D50, the span, the specific surface area, and the carbon content of the silicon-based particle of Embodiment 2-13 were 6.3 µm, 1.20, 2.3m²/g and 3.5 wt.% respectively. The grain size corresponding to a Si (111) crystal plane in the obtained material was 6.0 nm. The Raman scattering spectrum showed that silicon carbide existed in the material. It was observed that the relatively rough core was coated with a dense silicon carbide shell with a thickness of about 110 nm, and the silicon carbide shell was coated with a carbon layer with a thickness of about 35 nm.

The obtained silicon-based particle started to produce gas after being soaked in water for 10 days. The reversible specific capacity of the prepared negative half-cell was 424.4 mAh/g, and the initial coulombic efficiency was 93.7%. The expansion rate of the prepared negative electrode piece of the full-cell was 27.0%, the energy density per unit weight was 413 Wh/kg, and the capacity retention rate after 200 cycles was 89.3%.

### Embodiment 2-14

Silicon monoxide particle powder (D50=5.0 µm, SPAN=1) was placed in humid air with a relative humidity of 100% (25°C) for surface treatment, the temperature was approximately 600°C, and the time was approximately 60 min.

The silicon monoxide particle powder subjected to surface treatment was put into a rotary furnace by a CVD method, then methane gas was introduced at a flow rate of 1 L/min, and the temperature was set at 1000°C and kept for 2 h to finish heat treatment. In this step, methane was deposited and carbonized under high temperature in an oxygen-free atmosphere, and at the same time, it partially reacted with the oxygen-enriched shell layer on the surface of the silicon monoxide particle to generate a silicon carbide layer. The carbonized product was crushed by a toothed disc mill and pulverized into fine powder.

Lithium doping treatment was performed by the same solid-phase doping method as in Embodiment 2-9.

The particle size D50, the span, the specific surface area, and the carbon content of the silicon-based particle of Embodiment 2-14 were 5.6 µm, 1.30, 5.0 m²/g and 3.5 wt.% respectively. The grain size corresponding to a Si (111) crystal plane in the obtained material was 5 nm. The Raman scattering spectrum showed that silicon carbide existed in the material. It was observed that the relatively rough core was coated with a dense silicon carbide shell with a thickness of about 10 nm, and the silicon carbide shell was coated with a carbon layer with a thickness of about 50 nm.

The obtained silicon-based particle started to produce gas after being soaked in water for 5 days. The reversible specific capacity of the prepared negative half-cell was 424.5 mAh/g, and the initial coulombic efficiency was 93.8%. The expansion rate of the prepared negative electrode piece of the full-cell was 28.1%, the energy density per unit weight was 413.2 Wh/kg, and the capacity retention rate after 200 cycles was 88.6%.

### Comparative example 2-1

Silicon monoxide particle powder (D50=5.0 µm, SPAN=1.30) without surface treatment was placed in a rotary furnace and heated to 1000°C, then methane was introduced at a flow rate of 1 L/min for 60 min. After that, the temperature was lowered to room temperature to obtain a product, which was performed to removing magnetic impurities and sieving to obtain a silicon-based particle with a conductive carbon layer.

The particle size D50, the span, the specific surface area, and the carbon content of the silicon-based particle were 5.6 µm, 1.50, 5.0 m²/g and 3.5 wt.% respectively. The grain size corresponding to a Si (111) crystal plane in the material obtained in Comparative example 2-1 was 4 nm. It was observed that outside the relatively rough core, no silicon carbide shell existed, and a carbon layer with a thickness of 40 nm was provided as the outermost layer.

Since the silicon monoxide particle of Comparative Example 2-1 was not subjected to the lithium doping treatment, a water tolerance test was not needed.

The reversible specific capacity of the prepared negative half-cell was 465 mAh/g, and the initial coulombic efficiency was 88.4%. The expansion rate of the prepared negative electrode piece of the full-cell was 31.4%, the energy density per unit weight was 412 Wh/kg, and the capacity retention rate after 200 cycles was 84.1%.

### Comparative example 2-2

Silicon monoxide particle powder (D50=5.0 µm, SPAN=1) without surface treatment was used. By using the same coating and heat treatment methods as in Embodiment 2-1, silicon monoxide particle powder with only a conductive carbon layer was obtained.

In the same way as in Embodiment 2-1, liquid-phase lithium doping treatment was performed on the silicon monoxide particle powder. Finally, after sieving and removing magnetic impurities, a product which can be used as an anode material was obtained.

The particle size D50, the span, the specific surface area, and the carbon content of the silicon-based particle of Comparative example 2-2 were 6.1 µm, 1.4, 3 m²/g and 3.8 wt.% respectively. An X-ray diffraction pattern showed that the silicon grain size of the material was 5 nm. It was observed that outside the relatively rough core, no silicon carbide shell existed, and a carbon layer with a thickness of 40 nm was provided.

The obtained silicon-based particle started to produce gas after being soaked in water for 3 days. The reversible specific capacity of the prepared negative half-cell was 424.3 mAh/g, and the initial coulombic efficiency was 93.2%. The expansion rate of the prepared negative electrode piece of the full-cell was 29.6%, the energy density per unit weight was 411.5 Wh/kg, and the capacity retention rate after 200 cycles was 87.3%.

### Comparative example 2-3

Silicon monoxide particle powder (D50=5.0 µm, SPAN=1.3) was placed in humid air with a relative humidity of 100% (25°C). The temperature was 1150°C, kept for 30 min, and then decreased to room temperature.

Follow-up treatment was performed by the same method as in Embodiment 2-1, except that the amount of petroleum pitch relative to the silicon monoxide particle in Comparative example 2-3 was 10 wt.%.

The particle size D50, the span, the specific surface area, and the carbon content of the silicon-based particle of Comparative example 2-3 were 6.3 µm, 1.4, 2.5 m²/g and 3.8 wt.% respectively. The grain size corresponding to a Si (111) crystal plane in the obtained material was 5 nm. It was also found that a Si-O peak was enhanced compared with other embodiments. The Raman scattering spectrum showed that silicon carbide existed in the material. It was observed that the relatively rough core was coated with a dense silicon carbide shell with a thickness of about 300 nm, and the silicon carbide shell was coated with a carbon layer with a thickness of about 40 nm.

The obtained silicon-based particle started to produce gas after being soaked in water for 12 days. The reversible specific capacity of the prepared negative half-cell was 403.4 mAh/g, and the initial coulombic efficiency was 93.1%. The expansion rate of the prepared negative electrode piece of the full-cell was 29.6%, the energy density per unit weight was 402.6 Wh/kg, and the capacity retention rate after 200 cycles was 83.3%.

Obviously, the above embodiments are only examples to clearly explain the application, and are not a limitation to the implementation. For those of ordinary skill in the art, other changes or modifications in different forms can be made on the basis of the above description. It is neither necessary nor possible to exhaust all the embodiments here. However, the obvious changes or modifications drawn thereout are still within the protection scope of this application.

## Claims

1. A silicon-based particle with a core-shell structure, comprising:
a core comprising an oxygen-containing silicon-based compound matrix and nano-silicon grains, a molar ratio of oxygen to silicon in the core being 0.5-1.5;
a silicon carbide layer covering the core; and
a carbon layer covering the silicon carbide layer.

2. The silicon-based particle of claim 1, wherein the oxygen-containing silicon-based compound matrix is a lithium silicate compound matrix, and a molar ratio of lithium to silicon in the core is 0.1-2.

3. The silicon-based particle of claim 1, wherein the nano-silicon grains are uniformly dispersed in the oxygen-containing silicon-based compound matrix.

4. The silicon-based particle of claim 1, wherein a median size of the nano-silicon grains is 0.1-25 nm, preferably 0.3-15 nm.

5. The silicon-based particle of claim 1, wherein a median size of the core is 0.05-20 µm, preferably 0.3-15 µm.

6. The silicon-based particle of claim 1, wherein a particle size span of the core is ≤2.0, preferably ≤1.5, more preferably ≤1.3.

7. The silicon-based particle of claim 1, wherein a thickness of the silicon carbide layer is 1-200 nm, preferably 8-100 nm.

8. The silicon-based particle of claim 1, wherein a thickness of the carbon layer is 1-2000 nm, preferably 3-500 nm, more preferably 5-200 nm.

9. The silicon-based particle of claim 1, wherein a mass proportion of the carbon layer in the silicon-based particle is 0.1-15 wt.%, preferably 0.5-10 wt.%, more preferably 1-5 wt.%.

10. The silicon-based particle of claim 1, wherein a specific surface area of the silicon-based particle is 0.1-20 m²/g, preferably 0.8-10 m²/g, more preferably 1-7 m²/g.

11. The silicon-based particle of claim 9, wherein a tap density of the silicon-based particle is ≥0.4 g/cm³, preferably ≥0.7 g/cm³.

12. A method for preparing a silicon-based particle with a core-shell structure, comprising:
performing a surface treatment on SiOx particles;
performing carbon coating on the surface-treated SiOx particles to form a silicon carbide layer and a conductive carbon layer; and
performing sieving and removing magnetic impurities on the carbon-coated material.

13. The method of claim 12, further comprising:
performing a lithium doping treatment on the carbon-coated material.

14. The method of claim 13, wherein the lithium doping treatment is performed by at least one of an electrochemical method, a liquid-phase doping method, a thermal doping method, a high-temperature mixing method and a high-energy mechanical method.

15. The method of claim 12, wherein the surface treatment comprises gas-phase treatment or liquid-phase treatment.

16. The method of claim 15, wherein the gas-phase treatment comprises:
heating the SiOx particles in an oxygen-containing atmosphere for 10-600 mins at 300-1100°C;
wherein the oxygen-containing atmosphere comprises one or more of oxygen, water vapor and air.

17. The method of claim 15, wherein the liquid-phase treatment comprises:
soaking the SiOx particles in water, a hydrogen peroxide solution or a nitric acid solution;
wherein a mass concentration of the hydrogen peroxide solution and a mass concentration of the nitric acid solution are ≤30 wt.%, and the liquid-phase treatment is performed at 0-100°C for 10-600 mins.

18. The method of claim 12, wherein the carbon coating is performed by a chemical vapor deposition method or a heat treatment carbonization method;
wherein the heat treatment carbonization method comprises: mixing the surface-treated SiOx particles with a carbon precursor, and then performing a heat treatment for carbonization in a non-oxidizing atmosphere.

19. The method of claim 18, wherein the chemical vapor deposition method or the heat treatment carbonization method is performed at 800-1200°C for 0.5-24 h.

20. An anode material for a battery, comprising the silicon-based particle of claims 1-11.

21. An electrode, comprising the anode material of claim 20.

22. A battery, comprising the electrode of claim 21.
